# FASCICULE DE BREVET EUROPEEN

(11) **EP 3 047 117 B1**
(45) Date de publication et mention de la délivrance du brevet: **01.11.2017**
(21) Numéro de dépôt: 14784280.1
(22) Date de dépôt: 12.09.2014
(51) Int. Cl.: F01D 19/00, F02C 7/272, F02C 7/277

(54) **SYSTÈME ET PROCÉDÉ DE DÉMARRAGE D'URGENCE DE TURBOMACHINES D'AÉRONEF**
SYSTEM UND VERFAHREN ZUM NOTSTARTEN FLUGZEUGTURBOMASCHINEN
SYSTEM AND METHOD FOR THE EMERGENCY STARTING OF AIRCRAFT TURBOMACHINES

(30) Priorité: 19.09.2013 FR 1358996
(43) Date de publication de la demande: 27.07.2016
(73) Titulaire: Safran Aircraft Engines, 75015 Paris (FR); Safran Helicopter Engines, 64510 Bordes (FR)
(72) Inventeur: THIRIET, Romain, F-64110 Jurancon (FR); MARCONI, Patrick, F-64110 Gelos (FR); SERGHINE, Camel, F-64510 Boeil-bezing (FR); CARATGE, Antoine Marie Georges, F-77550 Moissy-Cramayel Cedex (FR); DANGUY, François, F-77550 Moissy-Cramayel Cedex (FR); FABBRI, Laurent, F-77550 Moissy-Cramayel Cedex (FR); YVART, Pierre, F-91610 Ballancourt Sur Essonne (FR); SOULIE, Laurent, F-33000 Bordeaux (FR); BARRAT, Philippe, F-33160 Saint Medard En Jalles (FR)
(74) Mandataire: Gevers & Orès
(86) Numéro de dépôt international: PCT/FR2014/052263
(87) Numéro de publication internationale: WO 2015/040310

(56) Documents cités:
- EP-A2- 2 267 288
- FR-A- 1 207 024
- FR-A- 1 361 269
- FR-A- 1 448 767
- FR-A1- 2 967 132

## Description

### DOMAINE TECHNIQUE

La présente invention concerne un système et un procédé de démarrage d'urgence d'une turbomachine d'aéronef, et en particulier d'un hélicoptère.

### ETAT DE L'ART

Dans le cas d'un hélicoptère bimoteur (FR 2 967 132 et FR 2 967 133), des situations critiques peuvent surgir lorsque l'un des moteurs est volontairement éteint. Ce mode est en effet recommandé pour minimiser la consommation pendant les phases de recherche et de croisière d'une mission. Dans ce contexte, deux situations exceptionnelles peuvent survenir qui nécessitent alors un redémarrage d'urgence du moteur éteint :
- le seul moteur actif s'arrête ou ralentit sensiblement suite à une panne ou un incident ; et
- les conditions de vol subissent une dégradation imprévue qui nécessite un retour en mode bimoteur (hauteur de vol insuffisante par exemple).

Le démarrage conventionnel d'une turbomachine est actuellement réalisé au moyen d'un démarreur électrique alimenté par le réseau de bord de l'hélicoptère. Cependant les performances de ce système sont incompatibles du besoin nécessaire pour un redémarrage d'urgence. Une adaptation du système électrique est possible mais nécessite l'emploi de technologie couteuse et pénalisante en masse (machine synchrone à aimants permanents, électronique de puissance et pack de batteries dédiés...).

Typiquement une séquence de démarrage conventionnelle d'un moteur en veille dure une trentaine de secondes, ce qui pourrait s'avérer trop long selon les conditions de vol, par exemple à faible altitude avec une défaillance au moins partielle du seul moteur actif. Si le moteur en veille ne redémarre pas à temps, l'atterrissage avec le moteur en difficulté peut s'avérer critique.

Plus généralement, les situations d'urgence qui peuvent surgir dans les applications envisagées ci-dessus, imposent de pouvoir disposer de temps de réaction de l'ordre de quelques secondes, afin d'assurer un démarrage ou un redémarrage d'urgence avec une marge de sécurité suffisante.

La présente invention apporte notamment une solution simple, efficace et économique à ce besoin. L'invention n'est toutefois pas limitée à l'application précitée et peut être utilisée pour assurer le démarrage d'urgence de turbomachines de tout type d'aéronef ou d'un hélicoptère équipé de plus de deux moteurs tel qu'un hélicoptère trimoteur.

Le document FR1207024 divulgue également un système de démarrage de turbomachines selon l'art antérieur.

### EXPOSE DE L'INVENTION

L'invention propose à cet effet un système de démarrage d'urgence de turbomachines d'aéronef conformément à la revendication 1, comprenant au moins un générateur de gaz à propergol solide, un dispositif d'allumage commandé électriquement, un calculateur relié au dispositif d'allumage, et au moins deux démarreurs indépendants destinés chacun au démarrage d'une turbomachine, chaque démarreur comportant une turbine d'entraînement d'un arbre destiné à être couplé à un arbre de la turbomachine correspondante, la sortie des gaz du générateur étant reliée à l'entrée de la turbine de chaque démarreur par une même vanne de distribution reliée au calculateur. L'invention propose donc une nouvelle technologie pour assurer le démarrage d'urgence de turbomachines d'aéronef. Cette technologie utilise un générateur de gaz à propergol solide, qui est relativement compact et peut s'intégrer facilement dans une turbomachine ou un aéronef. Un propergol solide est un matériau énergétique contenant les éléments oxydants (comburant) et réducteurs (combustible) permettant, par combustion (réaction d'oxydoréduction), la génération de produits de combustion gazeux hautement énergétiques. Selon l'invention, le matériau énergétique est un propergol solide. Ce propergol est par exemple un propergol homogène ou composite.

Un système de démarrage d'urgence à propergol solide dispose d'une forte densité de puissance et d'énergie par rapport à un accumulateur électrique, et permet d'obtenir des délais d'action significativement plus courts. Ce système bénéficie de plus d'une complète autonomie vis-à-vis du réseau électrique hélicoptère, notamment si le dispositif d'allumage est commandé par le calculateur de la turbomachine.

Lorsqu'une situation d'urgence est détectée, le calculateur est destiné à activer l'allumage du générateur de gaz. Les gaz produits par le générateur entraînent en rotation le rotor de la turbine et donc l'arbre d'entraînement de l'arbre de la turbomachine. La sortie de gaz du générateur est reliée à l'entrée de la turbine par une vanne de distribution qui est reliée au calculateur.

Selon l'invention, le système comprend deux démarreurs indépendants destinés au démarrage de deux turbomachines, indépendamment l'une de l'autre. La sortie de gaz du générateur est reliée à l'entrée de la turbine de chaque démarreur.

Le calculateur commande la vanne pour que les gaz issus de la combustion du propergol alimentent la turbine du démarreur associé à la turbomachine qui doit être démarrée en urgence.

La sortie de la turbine du ou de chaque démarreur est de préférence reliée à l'échappement. Cela est avantageux car, dans le cas où le rotor de la turbine serait bloqué en rotation, les gaz générés par le générateur de gaz traverseraient le rotor jusqu'à l'échappement, sans risque d'explosion de la turbine.

La turbine du ou de chaque démarreur peut comprendre une seule roue de rotor. La turbine du démarreur est par exemple conçue pour générer une puissance moyenne de 40-50kW en un laps de temps de 3s environ. Dans le cas où une performance supérieure serait requise, la turbine pourrait être optimisée en conséquence et comprendrait par exemple plus d'un étage.

L'arbre entraîné par la turbine est de préférence relié à une roue libre configurée pour transmettre un couple d'entraînement uniquement lorsqu'il provient du démarreur. Le rotor de la turbine du démarreur n'est ainsi pas entraîné par l'arbre de la turbomachine, lors de son fonctionnement, ce qui garantit une durée de vie optimale du démarreur. En variante, l'arbre entraîné par la turbine peut être relié directement à l'arbre de la turbomachine ou par des moyens de transmission configurés pour transmettre un couple d'entraînement lorsqu'il provient de l'un ou l'autre des arbres du démarreur et de la turbomachine. L'arbre entraîné par la turbine peut être couplé à l'arbre de la turbomachine par l'intermédiaire d'une boîte d'accessoires.

La présente invention concerne également un aéronef, tel qu'un hélicoptère, comportant au moins deux turbomachines et au moins un système de démarrage tel que décrit ci-dessus.

L'aéronef comprend au moins deux turbomachines, chaque turbomachine étant associée à un système de démarrage global composé d'un démarreur par turbomachine et d'un générateur de gaz commun.

La présente invention concerne également un procédé conformément à la revendication 6 de démarrage d'urgence d'une turbomachine d'aéronef au moyen d'un système tel que décrit ci-dessus, caractérisé en ce que le dispositif d'allumage est activé par le calculateur dès qu'une situation de démarrage d'urgence est détectée.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue très schématique d'un hélicoptère bimoteur équipé d'un système de démarrage d'urgence selon l'invention, et
- la figure 2 est une vue schématique d'un système de démarrage d'urgence selon l'invention, avec un vue en coupe axiale d'un démarreur de ce système, et
- les figures 3 et 4 sont des vues similaires à celle de la figure 1 et représentant des variantes de réalisation ne faisant pas partie de l'invention.

### DESCRIPTION DETAILLEE

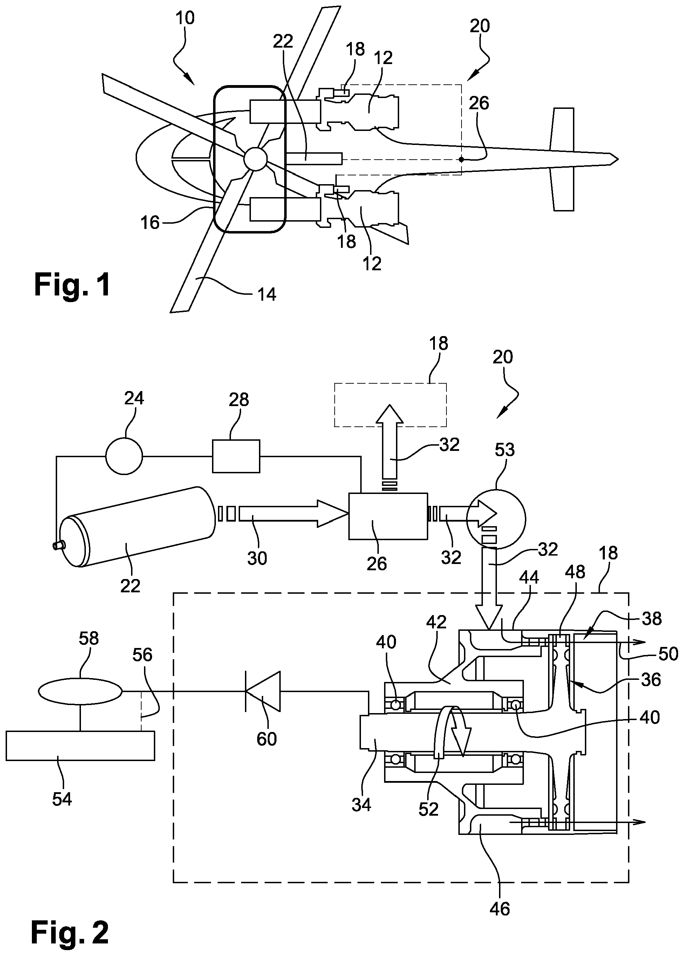

Les figures 1 et 2 représentent un exemple de réalisation de l'invention qui est ici appliqué à un hélicoptère bimoteur 10, cet hélicoptère comprenant deux turbomachines 12 d'entraînement du rotor de l'hélice 14 par l'intermédiaire d'une boîte de transmission principale 16.

Chaque turbomachine est équipée d'un démarreur 18 qui fait partie d'un système 20 de démarrage d'urgence selon l'invention (figure 2), le système 20 comprenant donc ici deux démarreurs 18.

Le système 20 comprend en outre un générateur de gaz 22 à propergol solide, un dispositif, commandé électriquement, d'allumage 24 du propergol solide, une vanne de distribution 26 reliant la sortie de gaz du générateur aux démarreurs 18, et un calculateur 28 relié au dispositif d'allumage 24 et à la vanne en vue de leur commande.

Le générateur de gaz 22 comprend ici un corps de forme cylindrique allongée contenant un ou plusieurs chargements de propergol solide de formes adaptées à la loi de débit de gaz souhaitée du générateur, ce corps servant de chambre de combustion. Il est à noter que la loi de débit souhaité peut être obtenue au moyen d'un choix approprié de la forme du chargement et/ou par l'inhibage total ou partiel de certaines parties de chargement.

Après allumage de la surface du chargement de propergol, la surface du chargement brûle et progresse en produisant des gaz de combustion sous haute pression, selon la loi de débit résultant de la forme et de l'inhibage du chargement. Les gaz sont évacués en sortie du générateur. La température de combustion à l'intérieur du générateur 22 est classiquement dans l'intervalle [1400K, 2700K].

Le dispositif d'allumage 24 est commandé électriquement par le calculateur 28 et est destiné à activer la combustion du propergol dès qu'un signal correspondant est émis par le calculateur 28.

La vanne de distribution 26 est par exemple du type à trois voies et comprend une voie d'entrée reliée à la sortie du générateur 22 (flèche 30) et deux voies de sortie reliées respectivement aux démarreurs 18 (flèches 32). La vanne 26 est telle que la voie d'entrée ne peut être reliée qu'à une seule des voies de sortie de façon à ce que le système 20 selon l'invention soit conçu pour ne démarrer en urgence qu'une seule turbomachine à la fois. La voie d'entrée est mise en communication fluidique avec l'une ou l'autre des voies de sortie en fonction d'un signal émis par le calculateur 28.

Le calculateur 28 est un boîtier électronique de commande tel que ceux couramment utilisés dans le domaine aéronautique. Lorsqu'il détecte une situation d'urgence, il active la vanne de distribution 26 et le dispositif d'allumage 24 de sorte que le démarreur 18 de la turbomachine à démarrer soit alimenté par les gaz de combustion générés par la combustion du propergol solide.

Un exemple de réalisation du démarreur 18 est schématiquement représenté en coupe axiale en figure 2. Il comprend essentiellement un arbre 34 portant une roue de rotor 36 d'une turbine 38 du type supersonique par exemple, l'arbre 34 étant guidé en rotation par des paliers 40 montés dans un carter 42 du démarreur. Le carter 42 comprend un orifice radial 44 formant l'entrée de la turbine 38 et débouchant dans une cavité annulaire 46 d'alimentation de la turbine. Cette cavité 46 peut avoir une section constante d'amont en aval ou avoir au contraire une section évolutive d'amont en aval.

Les gaz de combustion qui pénètrent dans la cavité 46 se détendent et s'écoulent à travers les aubes 48 de la roue 36 (flèches 50), ce qui entraîne en rotation la roue 36 et donc l'arbre 34 autour de son axe (flèche 52). Les gaz s'échappent ensuite de la turbine 38 à travers une tuyère de celle-ci et sont évacués vers l'extérieur (flèches 50).

Des moyens de refroidissement peuvent être prévus en amont de la turbine, de façon à réduire la température des gaz de combustion, par exemple jusqu'à 600K. Un filtre 53 peut en outre être monté en amont de la turbine de façon à limiter l'introduction de particules solides dans la veine de la turbine.

L'arbre 34 est destiné à transmettre un couple de démarrage à un arbre 54, par exemple haute pression, de la turbomachine auquel le démarreur 18 est associé. La transmission de ce couple peut être réalisée directement, comme cela est schématiquement représenté en traits pointillés 56, ou par l'intermédiaire de moyens de transmission tels qu'une boîte d'accessoires 58.

Il est préférable toutefois que la transmission du couple entre l'arbre 34 et l'arbre 54 ou la boîte d'accessoires 58 se fasse par l'intermédiaire d'une roue libre 60. Cette roue libre est schématiquement représentée par une diode car elle a pour fonction de transmettre un couple s'il parvient de l'arbre 34 mais pas s'il parvient de l'arbre 54. Lorsque la turbomachine a démarré, l'arbre 34 n'entraîne plus l'arbre 54.

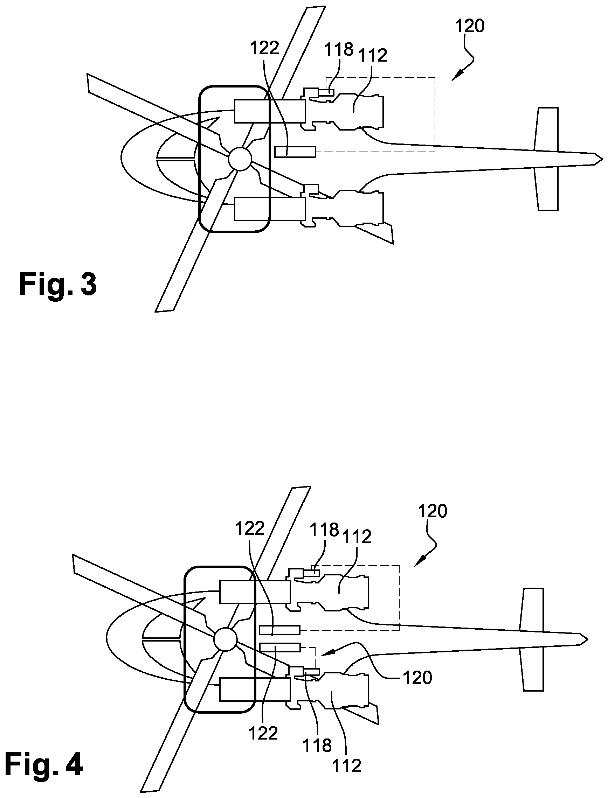

Dans la variante de réalisation représentée en figure 3 et ne faisant pas partie de l'invention, le système de démarrage ne comprend qu'un seul démarreur 118, le système de démarrage d'urgence 120 n'est donc associé qu'à une seule turbomachine 112 et ne comprend pas de vanne de distribution, la sortie des gaz du générateur 122 étant directement reliée à l'entrée de la turbine du démarreur.

Dans la variante de réalisation représentée en figure 4 et ne faisant pas partie de l'invention, chaque turbomachine 112 de l'hélicoptère bimoteur est associée à un système de démarrage 120 qui lui est propre et qui est donc indépendant de l'autre système 120. Chaque système 120 comprend un générateur 122 et un démarreur 118.

Dans une variante de l'invention non représentée, un système de démarrage pourrait comprendre plus d'un générateur de gaz par combustion d'un propergol solide, par exemple sous forme d'une « grappe », les générateurs seraient montés en parallèle et seraient actionnés de manière décalée dans le temps afin de réguler le débit global de gaz chauds alimentant le démarreur.

## Revendications

1. Système (20) de démarrage d'urgence de turbomachines (12) d'aéronef (10), comprenant au moins un générateur de gaz (22) à propergol solide, un dispositif d'allumage (24) commandé électriquement, et au moins deux démarreurs (18) indépendants destinés chacun au démarrage d'une turbomachine, chaque démarreur comportant une turbine (38) d'entraînement d'un arbre (34) destiné à être couplé à un arbre (54) de la turbomachine correspondante, **caractérisé en ce qu'**il comprend également un calculateur (28) relié au dispositif d'allumage et **en ce que** la sortie des gaz du générateur (22) est reliée à l'entrée (44) de la turbine de chaque démarreur par une même vanne de distribution (26) reliée au calculateur (28).

2. Système (20) selon l'une des revendications précédentes, **caractérisé en ce que** la sortie de la turbine (38) de chaque démarreur (18) est reliée à l'échappement.

3. Système (20) selon l'une des revendications précédentes, **caractérisé en ce que** la turbine (38) de chaque démarreur (18) comprend une seule roue de rotor (36).

4. Système (20) selon l'une des revendications précédentes, **caractérisé en ce qu'**il comprend des moyens de couplage de l'arbre (34) entraîné par la turbine (38) à l'arbre (54) de la turbomachine (12), ces moyens de couplage comportant une roue libre (60) configurée pour transmettre un couple d'entraînement uniquement lorsqu'il provient du démarreur (18).

5. Aéronef comprenant au moins deux turbomachines (12, 112), **caractérisé en ce qu'**il comprend un système de démarrage (20) d'urgence selon l'une des revendications 1 à 4.

6. Procédé de démarrage d'urgence d'une turbomachine (12) d'aéronef au moyen d'un système (20) selon l'une des revendications 1 à 4, **caractérisé en ce que** le dispositif d'allumage (24) est activé par le calculateur (28) dès qu'une situation de démarrage d'urgence est détectée.

## Patentansprüche

1. System (20) für das Notfallstarten von Turbomaschinen (12) eines Flugzeugs (10), das mindestens einen Gasgenerator (22) für festen Brennstoff, eine elektrisch gesteuerte Zündvorrichtung (24), und mindestens zwei unabhängige Starter (18) umfasst, die jeweils zum Starten einer Turbomaschine bestimmt sind, wobei jeder Starter eine Turbine (38) zum Antreiben einer Welle (34) umfasst, die dazu bestimmt ist, mit einer Welle (54) der entsprechenden Turbomaschine gekoppelt zu sein, **dadurch gekennzeichnet, dass** es ebenfalls einen Rechner (28) umfasst, der mit der Zündvorrichtung verbunden ist, und dass der Ausgang des Gasgenerators (22) mit dem Eingang (44) der Turbine von jedem Starter durch ein gleiches Absperrorgan zur Verteilung (26) verbunden ist, das mit dem Rechner (28) verbunden ist.

2. System (20) nach einem der vorhergehenden Ansprüche, **dadurch gekennzeichnet, dass** der Ausgang der Turbine (38) von jedem Starter (18) mit dem Auspuff verbunden ist.

3. System (20) nach einem der vorhergehenden Ansprüche, **dadurch gekennzeichnet, dass** die Turbine (38) von jedem Starter (18) ein einziges Rotorrad (36) umfasst.

4. System (20) nach einem der vorhergehenden Ansprüche, **dadurch gekennzeichnet, dass** es die Mittel zur Kopplung der Welle (34), die von der Turbine (38) angetrieben wird, an der Welle (54) der Turbomaschine (12) umfasst, wobei diese Mittel zur Kopplung ein freies Rad (60) umfassen, das konfiguriert ist, ein Antriebsdrehmoment zu übertragen, nur wenn es von dem Starter kommt (18).

5. Luftfahrzeug, das mindestens zwei Turbomaschinen (12, 112) umfasst, **dadurch gekennzeichnet, dass** es ein System (20) für das Notfallstarten nach einem der Ansprüche 1 bis 4 umfasst.

6. Verfahren zum Notfallstarten einer Turbomaschine (12) eines Flugzeugs mit Hilfe eines Systems (20) nach einem der Ansprüche 1 bis 4, **dadurch gekennzeichnet, dass** die Zündvorrichtung (24) durch den Rechner (28) aktiviert wird, sobald eine Notfallstartsituation erkannt wird.

## Claims

1. Emergency start system (20) for turbine engines (12) of an aircraft (10), comprising at least one solid-propellant gas generator (22), an electrically controlled ignition device (24), and at least two independent starter motors (18), each intended for starting one turbine engine, each starter motor comprising a turbine (38) for driving a shaft (34) intended for being coupled to a shaft (54) of the corresponding turbine engine, **characterised in that** it also comprises a computer (28) connected to the ignition device, and **in that** the outlet of the gases from the generator being connected to the inlet (44) of the turbine of each starter motor by means of the same distribution valve (26) connected to the computer (28).

2. System (20) according to the preceding claim, **characterised in that** the output of the turbine (38) of each starter motor (18) is connected to the exhaust.

3. System (20) according to any of the preceding claims, **characterised in that** the turbine (38) of each starter motor (18) comprises a single rotor wheel (36).

4. System (20) according to any of the preceding claims, **characterised in that** it comprises means for coupling the shaft (34) driven by the turbine (38) to the shaft (54) of the turbine engine (12), said coupling means comprising a freewheel (60) designed to transmit a driving torque only when said torque comes from the starter motor (18).

5. Aircraft comprising at least two turbine engines (12, 112), **characterised in that** it comprises an emergency start system (20) according to any of claims 1 to 4.

6. Method for emergency starting a turbine engine (12) of an aircraft by means of a system (20) according to any of claims 1 to 4, **characterised in that** the ignition device (24) is activated by the computer (28) as soon as an emergency start situation is detected.
